# EUROPEAN PATENT APPLICATION

(11) **EP 1 953 099 A1**
(43) Date of publication of application: **06.08.2008**
(21) Application number: 07101401.3
(22) Date of filing: 30.01.2007
(51) Int. Cl.: B65G 69/00

(54) **Inflatable shelter**

(71) Applicant: Crawford Group AB, 201 21 Malmö (SE)
(72) Inventor: Hagel, Tomas, 45144 Uddevalla (SE)
(74) Representative: Vink, Charlotta

(57) **Abstract**

This invention relates to a weather seal (1) in an opening (2) of a support structure (3) having at least an upper (4) and a pair of spaced apart, facing lateral inner edges (5). The weather seal (1) comprising,
at least two inflatable side bags (6) each coupled to a respective side frame (8) of said support structure (3), an inflating device (9) for inflating said side bags (6) such that, said side bags (6) expand primarily toward a center of the opening (2) to an expanded condition, in which condition a vehicle (19) positioned within the opening (2) may be engaged in a sealed manner. A steering portion (16) being formed by a protruding portion (17) of said side bag (6) during inflation of said side bag (6).

## Description

### Field of the Invention

A weather seal in an opening of a support structure having at least an upper and a pair of spaced apart, facing lateral inner edges, said weather seal comprising, at least two inflatable side bags each coupled to a respective side frame of said support structure, an inflating device for inflating said first and second side bags such that, said side bags expand primarily toward a center of the opening to an expanded condition, in which condition a vehicle positioned within the opening may be engaged in a sealed manner.

### Technical Background

The invention relates generally to closure structures positioned in an opening, such as a doorway, and is particularly directed to an apparatus disposed about an opening for engaging a body positioned within the opening in a sealed manner, such as a loading vehicle positioned in and extending through a warehouse door opening.

In the loading or unloading of a vehicle through an opening in a wall such as of a warehouse, it is frequently desirable to isolate the interior of the warehouse from the elements outside. For example, for the comfort and safety of the loading/unloading personnel it is frequently desirable, and perhaps essential, to isolate the outside elements of heat, cold, rain, snow, etc., from the working environment within the warehouse during the transfer of goods to or from the vehicle. Security reasons may also necessitate closure of the space between the doorway and the vehicle.

Prior art structures for providing such a seal have involved movable structures which extend outward from a wall of the warehouse and inward toward the center of the doorway in the wall. Such structures are typically termed "dock seals" and may involve fixed peripheral structures about the doorway or an inflatable structure adapted to engage the side of a rail car or end of a trailer positioned adjacent to the warehouse wall. Examples of inflatable dock seals can be found in U. S. Pat. Nos. 3, 303,615 (a single elongated inflatable tubular member mounted to adjacent outer and inner corner sections of a building opening).

These and other prior art dock seals generally involve a complicated mechanical and pneumatic arrangement which is highly subject to deterioration by the outside environment as well as damage from a misaligned vehicle attempting to back up into the wall opening about which the dock seal is disposed. In particular, those arrangements which extend inwardly from the sides of the aperture tend to extend substantially into the aperture, even when retracted, making them particularly susceptible to engagement and damage by a moving vehicle and only provide limited sealing engagement with a vehicle.

There exist in the art a weather seal which maintains its expanded condition by being constantly fed with air from an air supplier and maintains its retracted position by a constant exhaustion operation leading to a high energy consumption for the fan.

US 4,750,299 discloses a state of the art arrangement for retracting the side bags of the weather seal after engaged position with a vehicle. The retracting elements are formed by counterweights which are connected internally to the side bags at various locations by means of wires or ropes. In order to withstand the weight of the counter weights the side bags need to be fed with air pressure during a whole docking sequence in order not to loose the engaged condition.

Furthermore, the wires and ropes do not always provide for accurate alignment of the whole side bag during inflation and deflation and since the front and back portions of the side bags often are made of a different material than that provided to the side adapted for abutment with a vehicle there is a risk for extensive wear of these parts when exposed to movement against near lying structures and surfaces which is the result when the expansion/retraction is not performed in an aligned manner.

### Summary of the Invention

The object of the present invention is to provide a weather seal that overcomes the above issues and present an improved weather seal. Accordingly, it is an object of the present invention to provide an arrangement for engaging a vehicle positioned within an aperture of a wall in a sealed manner.

It is another object of the present invention to provide an air inflatable seal structure positioned around the inner periphery of a doorway opening for securely engaging a loading vehicle positioned within the doorway in a sealed manner when inflated and for assuming a retracted, non-engaging configuration when deflated.

Still another object of the present invention is to provide an improved air-inflatable perimeter seal for an opening which is economical, reliable, durable, and provides a seal with an object positioned within the opening regardless of the object's exact cross sectional dimensions or shape.

A further object of the present invention is to provide an energy saving weather seal for an opening which is easily and quickly extendable by air under pressure to an object-engaging configuration and which retracts to a stored position when the pressurized air is removed, i.e. by sucking out the air through the fan.

A still further object of the present invention is to provide an inflatable weather seal which is capable of economical operation and fabrication and relatively simple in construction, and which effectively isolates the areas on facing sides of the wall from each other.

Another object of the present invention is to provide a dock seal wherein facing edges of the expandable side portions are maintained in precise alignment with each other and with the sides of a vehicle.

These and other objects are achieved by a weather seal according to claim 1. Preferred embodiments of the invention are defined in the dependent claims.

According to the invention there is provided a weather seal in an opening of a support structure having at least an upper and a pair of spaced apart, facing lateral inner edges, said weather seal comprising, at least two inflatable side bags coupled to a respective side frame of said support structure, an inflating device for inflating said side bags such that, said side bags expand primarily toward a center of the opening to an expanded condition, in which condition a vehicle positioned within the opening may be engaged in a sealed manner, and in that a steering portion is formed by a protruding portion of said side bag side during inflation of said side bag.

Hence, a controlled movement of the side bag is enabled in that the steering portion is held in a fixed position while the remaining part of the side bag is inflated resulting in that said side bag side approaches its engaging position.

Suitably, at least one of said side bags along a part of its side having a steering portion which reaches the position for abutment of the vehicle before the remaining part of said side bag side has followed during expansion of said side bag. By first enabling contact with a smaller part of said side bag side the side bag as a whole will experience a controlled movement to its engaging/inflated condition even in more harsh environmental conditions or where limited damage may occur.

Preferably, said steering portion is formed by a protruding portion of a lower pocket formed substantially in the area between a pair of biasing means and an edge portion of said side bag.

More preferably, said steering portion is formed by a protruding portion of a lower pocket of said side bag, said lower pocket being arranged for assuming a triangular shape during inflation until the internal pressure of said side bag is overcoming a biasing force leading to further expansion of the near lying side bag pocket. By providing initial abutment in the lower region of the side bag the controlled motion of the remaining side bag portion is accounted for most vehicle types. Furthermore, the side bag assumes the triangular shape rapidly and hence the controlled movement is immediately provided for. Moreover and with respect to the initial phase a triangular portion will not experience the same amount of loading that may cause a loss of direction or misalignment.

The present invention allows for an efficient manufacturing and installation procedure. A pair of biasing means are arranged for non-mechanical contact in the expanded condition of the side bag. In the retracted condition of the side bags a pair of biasing means may be arranged to have mechanical contact with one another.

Moreover, the air supply is only necessary during the expansion phase of the side bags leading to saving of energy.

According to a preferred embodiment the biasing means are magnetisable. Any one of said magnets are positionable at desired locations within the side bag and are thus preferred.

Preferably, said biasing means are provided in pairs in said side bags along an axis propagating transverse in relation to the intended expansion direction of said side bags.

Advantageously, at least one of said side bags comprising a plurality of serially coupled pleated sections having a hole disposed there through. The biasing means are positioned near said holes. By using an air supplier capable of both inflating and deflating quick response and performance during these sequences are assured for the side bags. In order to further speed up retraction during deflation the number of and as well as the position of the holes may be adapted for the weather seal in question.

More preferably, at least one of said side bags being provided with at least one one-way valve for enabling the discharge of air and hence the deflation speed during movement towards said side frame. Suitably, a one one-way valve is positioned by any one of said holes. Consequently, said inflating device is an air supplier/disposer arranged to any one of said side bags near, as taken along a vertical axis, an edge portion of the actual side bag.

Suitably, said side bags comprising pockets formed between said biasing means provided in pairs, said pairs of biasing means being arranged along an axis propagating transverse in relation to the intended expansion direction of said side bags and at a distance corresponding to the height of the thus formed pocket.

Furthermore, it has been found that expansion and retraction in an aligned manner may be controlled in a highly sophisticated way due to this feature. A steering portion is formed by a protruding portion of said side bag during inflation of said side bag. Each one of said side bags along part of its side, being intended to abut against the vehicle when reaching the engaging position, has a steering portion which during expansion of said side bag reaches the position for abutment before the rest of said side bag has followed. Thus, the side bag is initially fixed to the vehicle by alignment of the steering portion and allows for the whole side bag to expand in an aligned manner towards said vehicle.

Preferably, said steering portion is formed by a protruding portion of a lower pocket, formed substantially in the area between a pair of biasing means and a side edge. More preferably, said steering portion is formed by a protruding portion of a lower pocket of said side bag, said pocket being arranged for assuming a triangular shape during inflation until the internal pressure of said side bag overcomes said biasing force, which in turn leads to further expansion of the near lying side bag pocket.

In order to further provide for a sealed condition a header extending across an upper portion of the wall opening is provided. Said header is arranged to closely follow the upper edge of a vehicle in an essentially vertical direction, during loading and off-loading, thus maintaining a sealed condition. The header is advantageously provided on a windable screen.

The weather seal further comprises first and second stop means positioned adjacent to respective lower end portions of each of said side frames for protecting said side frames and said side bags from impact damage.

### Brief Description of the Drawings

A currently preferred embodiment of the present invention will now be described in more detail, with reference to the accompanying drawings.

Fig. 1 is a schematic perspective view of a weather seal according to an embodiment of the invention.

Fig. 2 is a partial front view of a weather seal disclosing a left hand side bag according to an alternative aspect of the invention.

Fig. 3a-3d disclose steps in a docking sequence from opened to sealed condition according to a currently preferred method of the invention.

Fig. 4a-4c disclose steps in an inflating sequence from an empty to a filled condition of a weather seal side bag according to a currently preferred method of the invention.

Fig. 5 discloses a side bag in a cross-sectional view of the weather seal side bag in fig 4b as taken along section line V-V.

Fig. 6 discloses a side bag in a cross-sectional view of the weather seal side bag in fig 4b as taken along section line VI-VI.

Fig. 7 discloses a side bag in a cross-sectional view of the weather seal side bag in fig 4b as taken along section line VII-VII.

### Detailed Description of Preferred Embodiments

A first embodiment of the invention related to a weather seal will be described in more detail in the following and with reference to the accompanying drawings.

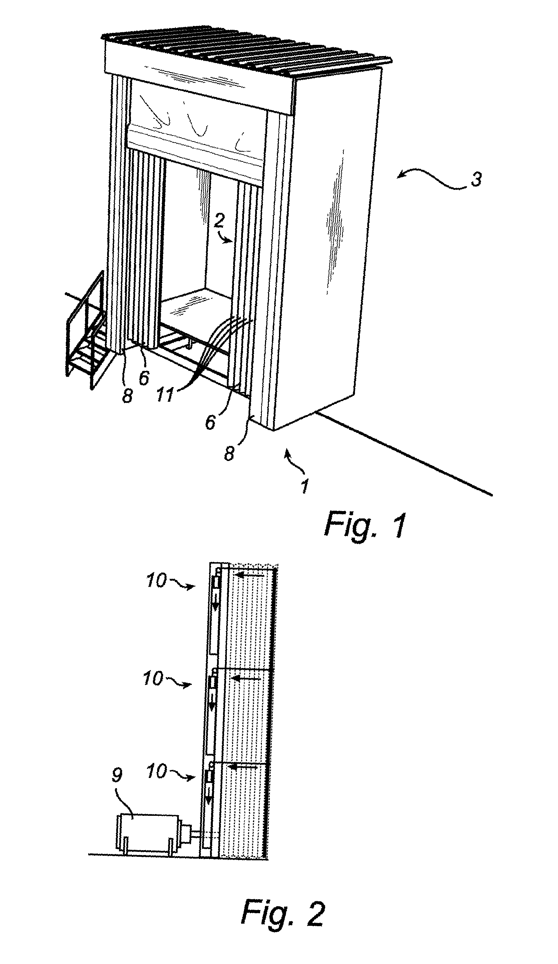

Referring now to Fig. 1, a weather seal 1 in an opening 2 of a support structure 3 having at least an upper 4 and a pair of spaced apart, facing lateral inner edges 5 (in this case hidden behind a pair of inflatable side bags and not fully visible). The weather seal 1 comprising at least two inflatable side bags 6. Each side bag is coupled to a respective side frame 8 of said support structure 3. An inflating device 9 (not shown) is provided for inflating said side bags 6 such that, said side bags 6 expand primarily toward a center of the opening 2 to an expanded condition. In the expanded condition a vehicle 19 (not shown) is positionable within the opening 2 and may then be engaged on its both sides in a sealed manner.

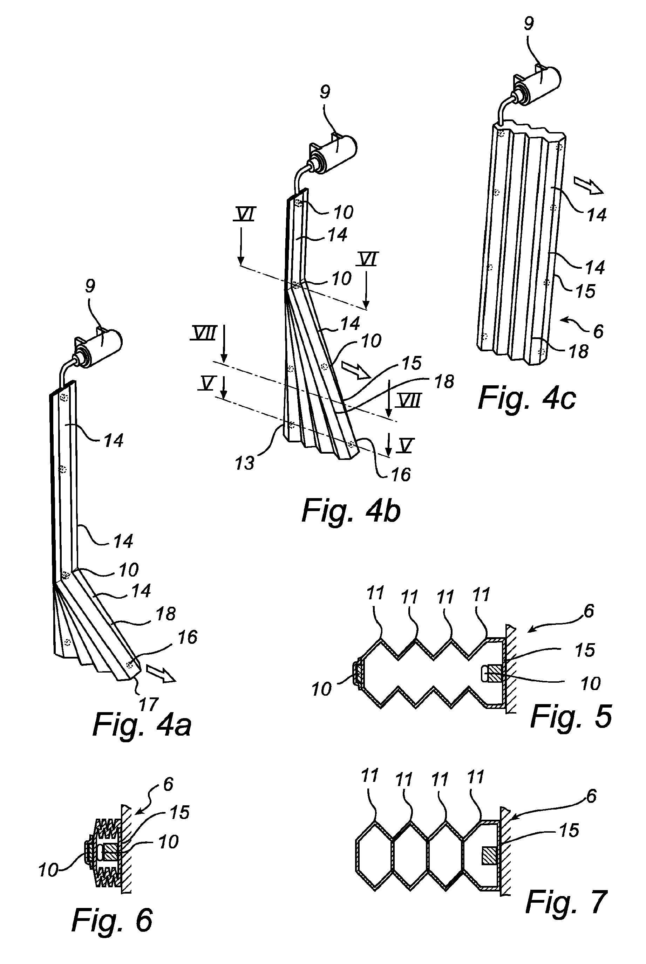

Furthermore and disclosed more in detail in fig 4a-4b, magnetisable means 10, providing said biasing force, are being arranged to said inflatable side bags 6. The biasing means 10 are arranged for urging said side bags 6 toward a respective side frame 8 when said side bags 6 are approaching a retracted condition. The retraction of the side bags are preferably, although not necessarily, accomplished by letting the air out by way of exhaustion by suction. According to the disclosed preferred embodiment at least one of the biasing means 10 is a magnet. The side bags 6 have pockets 14 formed by said biasing means 10 provided in pairs. The pairs of biasing means 10 are arranged along an axis propagating transverse in relation to the intended expansion direction of said side bags 6 and at a distance corresponding to the height of the thus formed pocket 14.

Preferably, the air supplier 9 is arranged in a weather protected environment and suitably at the top of the weather seal 1. The air is then fed along the respective side frame side of the respective side bag 6. The air is then causing expansion of the lower portion and forming an initial protruding portion. In accordance with common practice the air from said air supplier 9 is fed to the top of said side bag. Normally, the positioning of the air supplier/disposer, close to the sealing of a weather seal, will provide space for loading and off-loading operations of the vehicle.

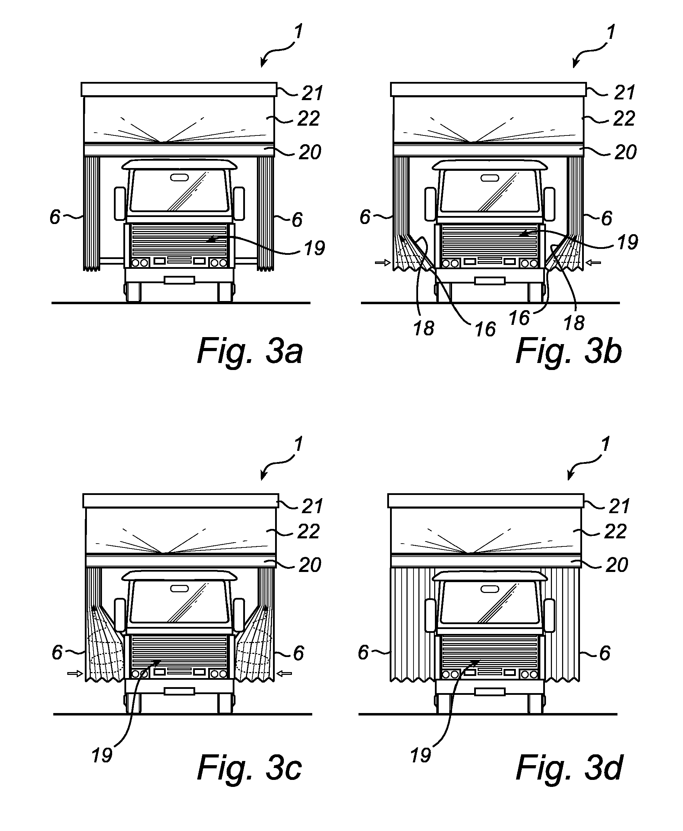

Referring now to figs. 3a-3d an inflating sequence according to a preferred method will be explained. The inflating device 9 (not shown) is an air supplier/disposer being arranged to any one of said side bags 6 near, as taken along a vertical axis, an edge portion 15 of the actual side bag. A steering portion 16 is formed by a protruding portion of said side bag during inflation of said side bag. Any one of said side bags 6 along part of its side, is intended to abut against the vehicle 19 when reaching the engaging position. During expansion the steering portion 16 reaches the position for abutment before the rest of said side bag 6 has followed. The steering portion 16 is formed by a protruding portion 17 of a lower pocket 18 of said side bag 6, said lower pocket 18 being arranged for assuming a triangular shape during inflation until the internal pressure of said side bag 6 is overcoming said biasing force leading to further expansion of the nearlying side bag pocket.

Suitably, said side bags comprises pockets formed between said biasing means, said biasing means being arranged in pairs along an axis propagating transverse in relation to the intended expansion direction of said side bags and at a distance corresponding to the height of the thus formed pocket.

A steering portion 16 is formed by a protruding portion of said side bag 6 during inflation of said side bag 6. Each one of said side bags 6 along part of its side, being intended to abut against a vehicle 19 when reaching the engaging position, has a steering portion 16 which during expansion of said side bag 6 reaches the position for abutment before the rest of said side bag 6 has followed. Thus, the side bag 6 is initially fixed to the vehicle 19 by alignment of the steering portion 16 and allows for the side bag to expand in an aligned manner towards said vehicle 19.

Preferably, said steering portion 16 is formed by a protruding portion of a lower pocket 14, formed substantially in the area between a pair of biasing means 10 and a side edge. More preferably, said steering portion 16 is formed by a protruding portion of a lower pocket 14 of said side bag 6, said pocket being arranged for assuming a triangular shape during inflation until the internal pressure of said side bag is overcoming said biasing force leading to further expansion of the nearlying side bag pocket.

Furthermore, a header 20 extends across an upper portion of the wall opening 2 bein. The header 20 is arranged to closely follow, in a vertical direction, the upper edge of a vehicle 19 during loading and off-loading, thus maintaining a sealed condition. Suitably, said header 20 is provided on a windable screen 22. The header 20 may alternatively be provided on an inflatable upper bag (not shown). It is further realized that the weather seal 1 may comprise first and second stop means positioned adjacent to respective lower end portions of each of said side frames 8 for protecting said side frames 8 and said side bags 6 from impact damage.

Fig. 2 discloses an alternative aspect of the invention with retracting means for retracting the side bags of the weather seal after an engaged position with a vehicle (not shown). The retracting elements are formed by counterweights which are connected internally to the side bags at various locations by means of wires or ropes. Each counterweight is designed to have an appropriate weight for the actual level on which it acts and in relation to the other counterweights. Hence, the lowermost retracting element comprising e.g. a counterweight will have the lowest resistance against the expanding movement of the side bag leading to an initial protruding portion and a contact between a vehicle and the side bag followed by the rest of the side bag in a continuous movement. In order to withstand the weight of the counter weights the side bags are fed with air pressure during a whole docking sequence in order not to loose the engaged condition.

Finally, and with reference to figs. 5, 6 and 7 the positioning and function of the biasing means 10 provided in pairs in said side bags 6 along an axis propagating transverse in relation to the intended expansion direction of said side bags 6 will be explained. At least one of said side bags 6, comprising a plurality of serially coupled pleated sections 11, has a hole 12 disposed therethrough. The biasing means 10 are positioned near said holes 12 and preferably above said hole.

At least one of said side bags 6 being provided with a one one-way valve 13 for enabling the discharge of air during movement towards said side frame 8. Suitably, one-way valves 13 are positioned by each hole 12 in order to achieve a fast deflation sequence. As disclosed in e.g. fig. 5 the side of the side bag 6 mounted to a wall or side frame portion will have a magnet 10 arranged at a distance from said side frame 8 allowing for air supply to the lower pockets in the expansion phase of the weather seal. Furthermore, the other biasing means 10 may be of steel or other magnetisable compound. It is realised that the biasing means 10 need not be the same as long as they provide the necessary retaining force.

According to a preferred embodiment said other magnetisable means are being arranged in a small pocket with a possible although not shown communicating hole into the interior of said side bag 6.

In fig. 6 a retracted condition of said side bag is illustrated. Finally, with reference to accompanying drawings 7 and 5 the difference between a section by a pair of biasing means 10 and a section taken in between is illustrated when looking at fig. 7. In fig. 7 it can be seen that the interior of a side bag are formed by tube-like sections, which by each pair of biasing means 10 has a hole (as shown in figs. 5 and 6).

Although the present invention has been described in connection with particular embodiments thereof, it is to be understood that various modifications, alterations and adaptations may be made by those skilled in the art without departing from the spirit and scope of the invention.

## Claims

1. A weather seal (1) in an opening (2) of a support structure (3) having at least an upper (4) and a pair of spaced apart, facing lateral inner edges (5), said weather seal (1) comprising,
at least two inflatable side bags (6) each coupled to a respective side frame (8) of said support structure (3), an inflating device (9) for inflating said side bags (6) such that, said side bags (6) expand primarily toward a center of the opening (2) to an expanded condition, in which condition a vehicle (19) positioned within the opening (2) may be engaged in a sealed manner,
**characterised in that**
a steering portion (16) is formed by a protruding portion (17) of said side bag side during inflation of said side bag (6).

2. The weather seal (1) according to claim 1, in which at least one of said side bags (6) along a part of its side having a steering portion (16) which reaches the position for abutment of the vehicle (19) before the remaining part of said side bag side has followed during expansion of said side bag (6).

3. The weather seal (1) according to any one of claims 1-2, in which said steering portion (16) is formed by a protruding portion (17) of a lower pocket (18) formed substantially in the area between a pair of biasing means (10) and an edge portion (15) of said side bag (6).

4. The weather seal (1) according to any one of claims 1-3, in which said steering portion (16) is formed by a protruding portion (17) of a lower pocket (18) of said side bag (6), said lower pocket (18) being arranged for assuming a triangular shape during inflation until the internal pressure of said side bag (6) is overcoming a biasing force leading to further expansion of the near lying side bag pocket.

5. The weather seal (1) according to any one of claims 1-4, in which biasing means (10), providing a mutual biasing force with non-mechanical contact, are being arranged to said inflatable side bags (6), for urging said side bags (6) toward a respective side frame (8) when said side bags (6) are approaching said retracted condition.

6. A weather seal (1) according to claim 5, in which said biasing means (10) are magnetisable and said force is a magnetic force.

7. A weather seal (1) according to any one of claims 5-6, in which said biasing means (10) are provided in pairs in said side bags (6) along an axis propagating transverse in relation to the intended expansion direction of said side bags (6).

8. The weather seal (1) according to any one of claims 1-7, in which at least one of said side bags (6) comprising a plurality of serially coupled pleated sections (11) having a hole (12) disposed therethrough.

9. The weather seal (1) according to claim 8, in which said biasing means (10) are positioned near said holes (12).

10. The weather seal (1) according to any one of claims 1-9, in which at least one of said side bags (6) being provided with at least one one-way valve (13) for enabling the discharge of air during movement towards said side frame (8).

11. The weather seal (1) according to any one of claims 5-10, in which said side bags (6) comprising pockets (14) formed by said biasing means (10) provided in pairs, said pairs of biasing means (10) being arranged along an axis propagating transverse in relation to the intended expansion direction of said side bags (6) and at a distance corresponding to the height of the thus formed pocket (14).

12. The weather seal (1) according to any one of claims 1-11, in which said inflating device (9) is an air supplier/disposer being arranged to any one of said side bags (6) near, as taken along a vertical axis, an edge portion (15) of the actual side bag (6).

13. The weather seal (1) according to any one of claims 1-12, in which a header (20) extending across an upper portion of the wall opening (2) being provided.

14. The weather seal (1) according to any one of claims 1-13, in which a header (20) is arranged to closely follow the upper edge of a vehicle (19) in a vertical direction, during loading and off-loading, thus maintaining a sealed condition.

15. The weather seal (1) according to any one of claims 1-14, in which said header (20) is provided on a windable screen (22).

16. The weather seal (1) according to any one of claims 1-14, in which said header (20) is provided on an inflatable upper bag.

17. The weather seal (1) according to any one of claims 1-16, further comprising first and second stop means positioned adjacent to respective lower end portions of each of said side frames (8) for protecting said side frames (8) and said side bags (6) from impact damage.
